# EUROPEAN PATENT SPECIFICATION

(11) **EP 4 090 525 B1**
(45) Date of publication and mention of the grant of the patent: **21.02.2024**
(21) Application number: 21700803.6
(22) Date of filing: 13.01.2021
(51) Int. Cl.: B29D 30/06

(54) **VENTING VALVE AND METHOD OF MOUNTING VALVE STEM OF VENTING VALVE**
ENTLÜFTUNGSVENTIL UND VERFAHREN ZUR MONTAGE DES VENTILSCHAFTS EINES ENTLÜFTUNGSVENTILS
SOUPAPE DE MISE À L'ATMOSPHÈRE ET PROCÉDÉ DE MONTAGE DE TIGE DE SOUPAPE D'UNE SOUPAPE DE MISE À L'ATMOSPHÈRE

(30) Priority: 16.01.2020 FI 20205043
(43) Date of publication of application: 23.11.2022
(73) Proprietor: WD Racing Oy, 37200 Siuro (FI)
(72) Inventor: PENKKIMÄKI, Pekka, 37200 Siuro (FI)
(74) Representative: Papula Oy
(86) International application number: PCT/FI2021/050019
(87) International publication number: WO 2021/144504

(56) References cited:
- EP-A2- 0 774 333
- CN-A- 101 323 154
- CN-A- 109 435 293
- CN-U- 205 767 049
- CN-U- 205 818 269
- KR-A- 20110 059 062

## Description

### Background of the invention

The invention relates generally to a tyre manufacturing process and means used therein.

More specifically the disclosed solution relates to a venting valve intended for removing air from a vulcanising mould of a vehicle tyre.

The invention further relates to a method of mounting a valve stem of a venting valve.

The field of the invention is defined more specifically in the preambles of the independent claims.

When manufacturing pneumatic vehicle tyres, vulcanization molds are used. It is known that any tyre vulcanization mold must be vented so that a green tyre or tyre blank during blowing from an interior can come into contact with shaping tools of the vulcanization mold. During this process an exterior of the green tyre pushes the air radially outwardly. In case this air cannot be vented, it can cause missing contact between the inner contour of the vulcanization mold and the outer contour of the green tyre leading thereby deviations in the designed shapes and surface patterns of the tire. This is why tyre manufacturers pay great attention to the venting of vulcanization molds. The vulcanization mold is provided with a large number of venting bores in order to discharge the air out of the mold. The mold may comprise several hundreds or even 1000 - 9000 individual venting bores so that air pockets may be avoided. The venting bores can be equipped with venting valves which prevent the tyre material from entering the venting bore. Document EP-0774333-B1 discloses an example of such venting valve. However, the known venting valves and their mounting principles have shown to contain some disadvantages.

### Brief description of the invention

An object of the invention is to provide a novel and improved venting valve and a method for mounting the venting valve.

The venting valve according to the invention is characterized by the characterizing features of the independent apparatus claim.

The method according to the invention is characterized by the charactering features and steps of the independent method claim.

An idea of the disclosed solution is that the venting valve comprises a valve stem movement of which is limited by means of a retaining ring relative to a valve body of the venting valve. The retaining ring is mounted to a retaining groove, which is located on an outer surface of the valve body. In other words, the venting valve is provided with an external locking arrangement for the valve stem. The locking element is an external retaining ring. Further, at the bottom of the retaining groove there are at least two slits or cuttings forming openings which extend to the venting channel and provide selective access for locking the locking ring. The retaining ring mounted inside the retaining groove can then protrude at the slits inside the venting channel. The protruding parts of the retaining ring are configured to form retaining surfaces preventing a collar of the valve stem to pass the retaining ring.

An advantage of the disclosed solution is that the structure of the external retaining ring assembly allows the rest of the venting valve structure be simple, whereby it is easy to manufacture and is inexpensive too. Mounting of the retaining ring is facilitated when it is mounted laterally and outwards the venting channel. Furthermore, the venting valve may be provided with clear and relatively wide venting path which improves air discharge properties.

According to an embodiment, the retaining or locking ring is the only locking system provided for the valve stem.

According to an embodiment, the valve body comprises two slits on opposite sides of the valve body. The retaining ring may have two enlarged portions at its open ends and the enlarged portions are configured to protrude through the two slits or cuttings.

According to an embodiment, the valve body comprises three or four slits. Then the number of the enlarged portions of the retaining ring may also be three or four, or alternatively there may be two enlarged portions and two or more alternative mounting positions available.

According to an embodiment, the retaining ring is an elastically deformable element. Then the retaining ring may have a basic shape and it is expandable to greater dimensions when an external force is subjected to it.

According to an embodiment, the retaining ring is made of metal material, such as steel.

According to an embodiment, the retaining ring is made of plastic material or other polymer material.

According to an embodiment, the retaining ring is a retainer spring configured to snap into the retaining groove provided on an outer side of the valve body when being pushed externally in the lateral direction. In other words, the retainer ring and the groove provided with the cuttings may have a snap fitting.

According to an embodiment, shape of the retaining ring corresponds substantially to letter C, whereby the retaining ring has C-shaped configuration. At the ends of the C there are enlarged portions capable of protruding through the cuttings of the groove.

According to an embodiment, the retaining ring is an E type retaining ring, which is also known as the E-Ring or E-Clip. Then all three branches of the retaining ring may be provided with enlarged portions and the retaining groove is provided with at least three cuttings or slits enabling the enlarged portions to penetrate inside the venting channel.

According to an embodiment, the collar is provided with a first conical surface. The first conical surface is facing away from a valve member of the valve stem i.e. it is located at a second end of the valve body. The conical surface causes the retaining ring to expand when the valve stem is mounted by means of pushing movement inside the venting channel. The mounting may be smooth and controlled thanks to slanting surfaces of the conical surface.

According to an embodiment, the collar is provided with a second conical surface. The second conical surface is facing the first end of the valve body provided with a valve member. The conical surface causes the retaining ring to expand when the valve stem is removed from the venting channel by pushing it towards the first end of the valve body. This embodiment makes it possible to remove the valve insert comprising the valve stem and an opening spring if needed. Thanks to the slanting surfaces the removal is easy to execute.

According to an embodiment, the valve body comprises support surfaces inside the venting channel for an opening spring of the valve stem. The support surfaces are facing towards the valve member of the valve stem. The opening valve or the spring element is supported against the mentioned support surfaces.

According to an embodiment, the support surfaces are shoulder surfaces having an annular face towards the first end of the valve body. The shoulder is a fixed structural part of the valve body.

According to an embodiment, the retaining ring is configured to provide axial support for the spring element. Then the retaining ring has two purposes, namely to hold the collar and to support the spring.

According to an embodiment, the retaining ring only is configured to provide axial support for the spring element at a second end of the venting valve.

According to an embodiment, the retaining ring is configured to provide lateral support for the valve stem.

According to an embodiment, the retaining ring is configured to have three purposes: hold the collar, provide lateral support for the valve stem, and further, to support the spring axially. Thank to this, the other components may be relatively simple, whereby they can be easily manufactured.

According to an embodiment, the retaining ring is the only physical element at the second end part of the valve for providing the lateral support. In other words, the valve body is without any supporting surfaces for the valve stem at the second end part of the valve body.

According to an embodiment, the valve stem and its collar have solid configuration. In other words, the valve stem is without any axial slits or void spaces for allowing it to be pressed into smaller radial dimensions.

According to an embodiment, the retaining ring comprises two or more lugs protruding radially towards its central part.

According to an embodiment, the mentioned lugs are configured to protrude through the slits at the bottom of the retaining groove to the venting channel.

According to the invention, the disclosed solution relates to a method of mounting a valve stem of a venting valve comprising a valve body provided with a longitudinal venting channel. The method comprises pushing the valve stem under external mounting force longitudinally in mounting direction inside the venting channel against a spring force generated by means of a spring element. The method further comprises providing the valve stem with a collar and preventing the valve stem to escape from the valve channel by means of an external retaining ring supporting against the mentioned collar when the mounting force is removed and the spring force tries to move the valve stem against the mounting direction. The mentioned retaining ring is mounted in a lateral direction to a retaining groove formed on an outer surface of the valve body. The retaining ring is allowed to expand radially during the assembly and is allowed to return into its original shape when released into the retaining groove. Further, the retaining ring is allowed to selectively protrude inside the venting channel and to thereby form retaining surfaces for providing shape locking for preventing the valve stem from leaving the venting channel. The retaining ring prevents the collar to pass the retaining ring when the retaining ring is in its normal state without being expanded.

According to an embodiment, the method comprises providing lateral support for the valve stem only by means of the protruding parts of the retaining ring.

According to an embodiment, the method comprises expanding the retaining ring radially by means of conical surfaces of the collar when pushing the valve stem axially towards the mounting direction and/or correspondingly pushing the valve stem in an opposite direction when dismounting the valve stem.

The above disclosed embodiments and features may be combined in order to form suitable solutions that are needed.

### Brief description of the figures

Some embodiments are described in more detail in the accompanying drawings, in which
Figure 1 is a schematic and partly sectional view of a venting valve mounted to a venting bore of a vulcanization mold,
Figure 2 is a schematic and sectional side view of a venting valve provided with an external retaining ring mounted to an external retaining groove,
Figure 3 is a schematic view of a cross section A - A of Figure 2,

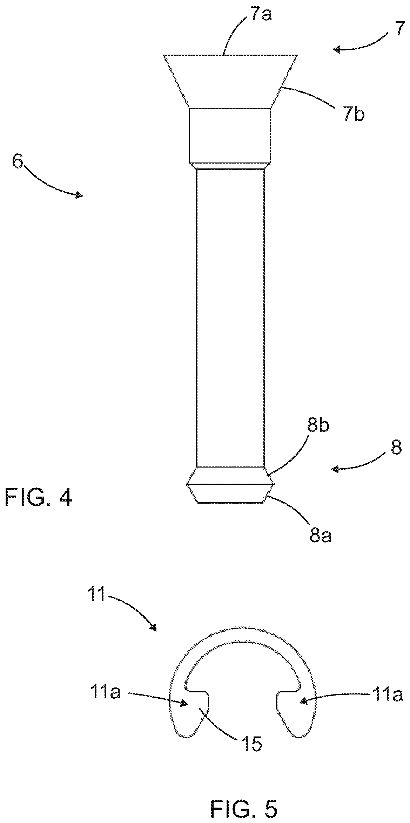

Figure 4 is a schematic side view of a valve stem mountable inside a central venting channel of the venting valve,
Figure 5 is a schematic side view of a retainer ring,
Figure 6 is a schematic side view of another venting valve wherein the retainer ring provides support for a spring element, and
Figure 7 is a schematic view of a cross section A - A of Figure 6.

For the sake of clarity, the figures show some embodiments of the disclosed solution in a simplified manner. In the figures, like reference numerals identify like elements.

### Detailed description of some embodiments

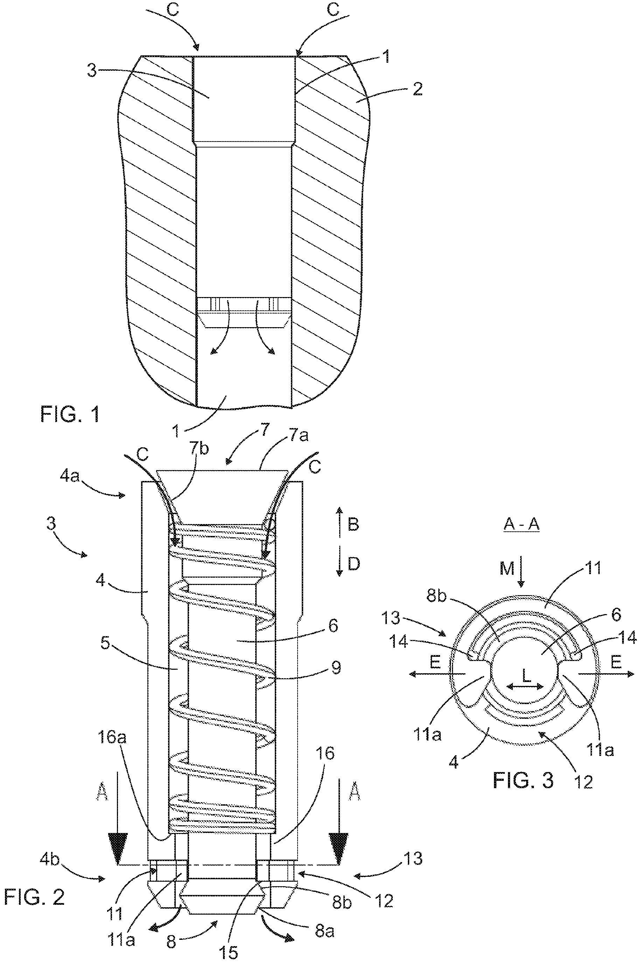

Figure 1 discloses a venting bore 1 of a vulcanization mold 2. The bore 1 has a first opening 1a at an inner side of the mould and a second opening at second side of the mould (not shown). The bore 1 is provided with a venting valve 3. Air inside of the mold can be vented through the venting valve 3 and the bore 1 out of the mold and the venting valve 3 is intended to be closed before material of the tire so that the tire material will not plug the venting bore 1.

Let it be mentioned that in this document terms tyre and tire mean the same as well as the terms mold and mould.

Figure 2 discloses a venting valve 3 comprising a valve body 4 provided with a first end 4a and a second end 4b. The first end 4a is facing towards an interior of the mould and the second end 4b is facing away from the interior of the mold. The valve body 4 is further provided with a central venting channel 5 via which the vented air is configured to flow. In other words, the valve body is an elongated sleeve-like element comprising an outer surface and inner surface. The outer surface may form a friction locking with surfaces of the venting bore. A valve stem 6 is mounted inside the venting channel 5. The valve stem 6 is axially movable relative to the valve body 4 for a limited distance. The valve stem 6 comprises a first end 6a provided with a valve member 7 for opening and closing the venting channel 5. The valve member 7 comprises a top surface 7a and conical sealing surfaces 7b. A second end 6b of the valve stem 6 is provided with a collar 8. The collar 8 is an enlarged portion at a distal end of the valve stem 6 and the collar 6 may be provided with a first conical surface 8a and a second conical surface. A spring element 9 is arranged to press the valve stem 6 in opening direction B towards an opening position wherein air flow C through the venting channel 5 is allowed. The spring element 9 may be a helical spring, for example. Tire blank material fed inside the mold presses the valve member 7 against spring force generated by the spring element 9 and closes a gap between the sealing surfaces 7b of the valve member 7 and mating sealing surfaces of the valve body 4. In other words, the tire blank moves the valve stem in closing direction D. The valve stem 6 and the spring element 9 form together a valve insert 10 mounted inside the valve body 4.

The venting valve 3 further comprises a locking arrangement 13 or system which is located at a second end portion 4b of the valve body 4 and is configured to limit the movement of the valve stem 6 in the opening direction B. The locking arrangement 13 comprises an external retaining ring 11 which serves as a mechanical locking element. The second end part 4b of the valve body 4 is provided with a retaining groove 12 on its outer surface for receiving the retaining ring 11. A bottom of the retaining groove 12 is provided with two or more slits 14 forming openings extending to the venting channel 5. Then the retaining ring 11 mounted inside the retaining groove 12 can partly protrude inside the venting channel 5. Protruding parts 11a of the retaining ring 11 are configured to form retaining surfaces 15 facing towards the collar 8 and preventing the collar 8 to pass the preventing surfaces 15. The protruding parts 11a of the retaining ring 11 are shown also in Figure 3.

Since the collar 8 has the first conical surface 8a and the second conical surface 8b, the valve stem 6 can be easily mounted by pushing it axially inside the venting channel 5, and can be correspondingly easily removed by pushing it axially in the opposite direction if the valve insert needs to be replaced. The conical surfaces 8a, 8b will smoothly expand the retaining ring 11 when the valve stem 8 is forced to move axially by means of external mounting force. The outwardly directed expansion E is shown in Figure 3 by means of arrows.

In the embodiment shown in Figure 2 the spring element 9 is supported at the second end 4b by means of a shoulder 16 of the valve body 4.

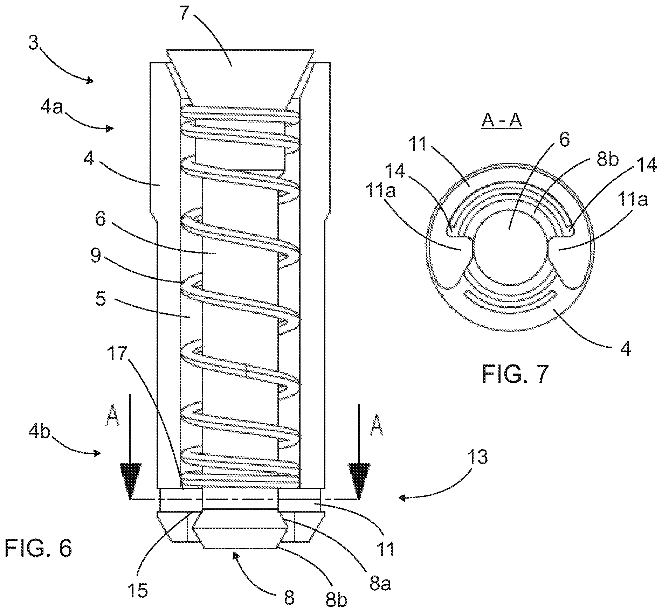

In another embodiment shown in Figure 6 the protruding parts 11a of the retaining ring 11 are configured not only to form retaining surfaces 15 for the collar 8 but also to provide support surface 17 for the spring element 9. Thus, in this solution the retaining ring 11 has two purposes. The structure of the venting body 4 may be even simpler when there is no need to arrange a fixed shoulder for the spring element.

In Figure 3 mounting direction M of the retaining ring 11 is shown by means of an arrow. The retaining ring 11 may be already mounted to the valve body and only thereafter the valve stem 6 is pushed along the venting channel towards the second end 4b. Then the first conical surface 8a facing the second end 4b cause the retaining ring 11 to expand and allow the collar 8 to pass the retaining ring 11.

Inner surfaces of the lugs 11a provide support for the valve stem 6 in lateral direction L. Between the shoulder and the valve stem 6 is an annular gap allowing removed air to pass the shoulder. Therefore, the shoulder does not provide any lateral support for the valve stem in the solution disclosed in Figure 2.

The drawings and the related description are only intended to illustrate the idea of the invention. In its details, the invention may vary within the scope of the claims.

## Claims

1. A venting valve (3) for removing air from a vulcanising mould (2) of a vehicle tyre,
wherein the venting valve (3) comprises:
a valve body (4) comprising a first end (4a) configured to face towards an interior of the mould (2) and a second end (4b) configured to face away from the interior of the mould (2);
a venting channel (5) passing longitudinally through the valve body (4);
a movable valve stem (6) arranged inside the venting channel (5) and comprising a first end (6a) provided with a valve member (7) for opening and closing the venting channel (5), and a second end (6b) provided with a collar (8) ;
a spring element (9) for pressing the valve stem (6) in opening direction (B) towards an opening position wherein air flow (C) through the venting channel (5) is allowed; and
a locking element which is located at a second end (4b) of the valve body (4) and is configured to limit the movement of the valve stem (6) in the opening direction (B);
**characterized in that**
the locking element is an external retaining ring (11) ;
the second end part (4b) of the valve body (4) is provided with a retaining groove (12) on its outer surface for receiving the retaining ring (11);
bottom of the retaining groove (12) is provided with at least two slits (14) forming openings extending to the venting channel (5); and
the retaining ring (11) mounted inside the retaining groove (12) is configured to partly protrude inside the venting channel (5) whereby the protruding parts of the retaining ring (11) are configured to form retaining surfaces (15) preventing the collar (8) to pass them.

2. The venting valve as claimed in claim 1, **characterized in that**
the valve body (4) comprises two slits (14) on opposite sides of the valve body (4).

3. The venting valve as claimed in claim 1, **characterized in that**
the retaining ring (11) is an elastically deformable element which has a basic shape and is expandable to greater dimensions.

4. The venting valve as claimed in any one of the preceding claims 1 to 3, **characterized in that**
the collar (8) is provided with a first conical surface (8a); and
the first conical surface (8a) is facing the second end (4b) of the valve body (4) and is configured to cause the retaining ring (11) to expand when the valve stem (6) is mounted inside the venting channel (5).

5. The venting valve as claimed in any one of the preceding claims 1 - 4, **characterized in that**
the collar (8) is provided with a second conical surface (8b); and
the second conical surface (8b) is facing the first end (4a) of the valve body (4) and is configured to cause the retaining ring (11) to expand when the valve stem (6) is removed from the venting channel (5) by pushing it towards the first end (4a) of the valve body (4).

6. The venting valve as claimed in any one of the preceding claims 1 - 5, **characterized in that**
the second end part (4b) of the valve body (4) comprises support surfaces (16a) inside the venting channel (5) and facing towards the first end (4a) of the valve body (4); and
the spring element (9) is supported against the mentioned support surfaces (16a).

7. The venting valve as claimed in any one of the preceding claims 1 to 5, **characterized in that**
the retaining ring (11) is configured to provide axial support for the spring element (9).

8. The venting valve as claimed in any one of the preceding claims 1 to 7, **characterized in that**
the retaining ring (11) is configured to provide lateral support for the valve stem (6).

9. The venting valve as claimed in any one of the preceding claims 1 to 8, **characterized in that**
the valve stem (6) and its collar (8) have solid configuration.

10. The venting valve as claimed in any one of the preceding claims 1 to 9, **characterized in that**
the retaining ring (11) comprises at least two lugs (11a) protruding radially towards its central part.

11. A method of mounting a valve stem (6) of a venting valve (3) comprising a valve body (4) provided with a longitudinal venting channel (5),
wherein the method comprises:
pushing the valve stem (6) under external mounting force longitudinally in mounting direction inside the venting channel (5) against a spring force generated by means of a spring element (9); and
providing the valve stem (6) with a collar (8) and preventing the valve stem (6) to escape from the venting channel (5) by means of a locking element supporting against the mentioned collar (8) when the mounting force is removed and the spring force tries to move the valve stem (6) against the mounting direction;
**characterized by**
using an external retaining ring (11) as the mentioned locking element;
mounting (M) the mentioned retaining ring (11) in a lateral direction to a retaining groove (12) formed on an outer surface of the valve body (4);
allowing the retaining ring (11) to expand radially during the assembly and to return into its original shape when released into the retaining groove (12); and
allowing the retaining ring (11) to partly protrude at selected locations inside the venting channel (5) and to form retaining surfaces (15) which prevent passing of the collar (8) when the retaining ring (11) is in its original shape without being expanded.

12. The method as claimed in claim 11, **characterized by**
providing lateral support for the valve stem (6) only by means of the protruding parts of the retaining ring (11) .

13. The method as claimed in claim 11 or 12, **characterized by**
expanding the retaining ring (11) radially by means of conical surfaces (8a, 8b) of the collar (8) when pushing the valve stem (6) axially towards the mounting direction and correspondingly pushing the valve stem (6) in an opposite direction when dismounting the valve stem (6).

## Patentansprüche

1. Belüftungsventil (3) zum Entfernen von Luft aus einer Vulkanisiermatrize (2) eines Fahrzeugreifens,
wobei das Belüftungsventil (3) aufweist:
einen Ventilkörper (4) mit einem ersten Ende (4a), das dazu vorgesehen ist, einem Inneren der Matrize (2) zugewandt zu sein, und einem zweiten Ende (4b), das dazu vorgesehen ist,
dem Inneren der Matrize (2) abgewandt zu sein,
einem Entlüftungskanal (6), der längs durch den Ventilkörper (4) tritt;
einem beweglichen Ventilstempel (6), der innerhalb des Entlüftungskanals (6) angeordnet ist und ein erstes Ende (6a) mit einem Ventilglied (7) zum Öffnen und Schließen des Ventilkanals (5), und ein zweites, mit einer Auskragung (8) ausgestattetes Ende (6b) aufweist,
ein Federelement (9) zum Drücken des Ventilstempels (6) in Öffnungs-Richtung (B) hin zu einer Öffnungs-Position, in der Luftstrom (C) durch den Entlüftungskanal (5) ermöglicht ist; und
ein Feststellelement, welches an einem zweiten Ende (4b) des Ventilkörpers (4) befindlich und dazu ausgebildet ist, die Bewegung des Ventilstempels (6) in der Öffnungs-Richtung (B) zu begrenzen;
**dadurch gekennzeichnet, dass**
das Feststellelement ein externer Rückhaltering (11) ist;
der zweite Endteil (4b) des Ventilkörpers (4) mit einer Rückhaltenut (12) an seiner Außenfläche ausgestattet ist, zum Aufnehmen des Rückhalterings (11);
der Boden der Rückhaltenut (12) mit wenigstens zwei Schlitzen (14) ausgestattet ist, die Öffnungen darstellen, die sich zum Entlüftungskanal (5) erstrecken; und
der in die Rückhaltenut (12) eingebrachte Rückhaltering (11) dazu ausgebildet ist,
teilweise ins Innere des Entlüftungskanals (5) hervorzustehen, wodurch die hervorstehenden Teile des Rückhalterings (11) dazu ausgebildet sind, Rückhalte-Flächen (15) darzustellen, die die Auskragung (8) daran hindern, sie zu passieren.

2. Belüftungsventil wie in Anspruch 1 beansprucht, **dadurch gekennzeichnet, dass** der Ventilkörper (4) zwei Schlitze (14) an gegenüberliegenden Seiten des Ventilkörpers (4) aufweist.

3. Belüftungsventil wie in Anspruch 1 beansprucht, **dadurch gekennzeichnet, dass** der Rückhaltering (11) ein elastisch verformbares Element ist, das eine Grundgestalt aufweist und zu größeren Abmessungen dehnbar ist.

4. Belüftungsventil wie in irgendeinem der vorstehenden Ansprüche 1 bis 3 beansprucht,
**dadurch gekennzeichnet, dass**
die Auskragung (8) mit einer ersten konischen Fläche (8a) ausgestattet ist; und
die erste konische Fläche (8a) dem zweiten Ende (4b) des Ventilkörpers (4) zugewandt und dazu ausgebildet ist, zu bewirken, dass der Rückhaltering (11) gedehnt wird, wenn der Ventilstempel (6) innerhalb des Entlüftungskanals (5) montiert wird.

5. Belüftungsventil wie in irgendeinem der vorstehenden Ansprüche 1 bis 4 beansprucht,
**dadurch gekennzeichnet, dass**
die Auskragung (8) mit einer zweiten konischen Fläche (8a) ausgestattet ist; und
die zweite konische Fläche (8a) dem ersten Ende (4b) des Ventilkörpers (4) zugewandt und dazu ausgebildet ist, zu bewirken, dass der Rückhaltering (11) gedehnt wird, wenn der Ventilstempel (6) aus dem Entlüftungskanal (5) entfernt wird, indem er zum ersten Ende (4a) des Ventilkörpers (4) gedrückt wird.

6. Belüftungsventil wie in irgendeinem der vorstehenden Ansprüche 1 bis 5 beansprucht,
**dadurch gekennzeichnet, dass**
der zweite Endteil (4b) des Ventilkörpers (4) Halterungsflächen (16a) innerhalb des Entlüftungskanals (5) aufweist, die dem ersten Ende (4a) des Ventilkörpers (4) zugewandt sind, und
das Federelement (9) gegen die erwähnten Halterungsflächen (16a) gehaltert ist.

7. Belüftungsventil wie in irgendeinem der vorstehenden Ansprüche 1 bis 5 beansprucht, **dadurch gekennzeichnet, dass**
der Rückhaltering (11) dazu ausgebildet ist, axiale Halterung für das Federelement (9) bereitzustellen.

8. Belüftungsventil wie in irgendeinem der vorstehenden Ansprüche 1 bis 7 beansprucht, **dadurch gekennzeichnet, dass**
der Rückhaltering (11) dazu ausgebildet ist, laterale Halterung für den Ventilstempel (6) bereitzustellen.

9. Belüftungsventil wie in irgendeinem der vorstehenden Ansprüche 1 bis 8 beansprucht,
**dadurch gekennzeichnet, dass**
der Ventilstempel (6) und seine Auskragung (8) eine solide Konfiguration haben.

10. Belüftungsventil wie in irgendeinem der vorstehenden Ansprüche 1 bis 9 beansprucht,
**dadurch gekennzeichnet, dass**
der Rückhaltering (11) wenigstens zwei Nasen (11a) aufweist, die radial zum Mittenteil hin hervorstehen.

11. Verfahren zum Montieren eines Ventilstempels (6) eines Entlüftungsventils (3) mit einem Ventilkörper (4) mit einem Längs-Entlüftungskanal (5),
wobei das Verfahren beinhaltet:
Drücken des Ventilstempels (5) unter äußerer Montier-Krafteinwirkung in Montier-Richtung in den Entlüftungskanal (5) entgegen einer mittels eines Federelements (9) erzeugten Federkraft; und
Bereitstellen des Ventilstempels (6) mit einer Auskragung (8) und Hindern des Ventilstempels (6) am Entweichen aus dem Entlüftungskanal (5) mittels eines gegen die erwähnte Auskragung (8) gehalterten Feststellelements, wenn die Montier-Krafteinwirkung nachlässt und die Federkraft versucht, den Ventilstempel (6) entgegen der Montier-Richtung zu bewegen;
**gekennzeichnet durch**
Verwenden eines externen Rückhalterings (11) als das erwähnte Feststellelement,
Anbringen (M) des erwähnten Rückhalterings (11) in lateraler Richtung in einer an einer Außenfläche des Ventilkörpers (4) gebildeten Rückhaltenut (12);
Ermöglichen des radialen Ausdehnens des Rückhalterings (11) während der Montage und Zurückkehren zur ursprünglichen Gestalt beim Einrücken in die Rückhaltenut (12); und Ermöglichen des teilweisen Hervorstehens des Rückhalterings (11) an bestimmten Stellen im Entlüftungskanal (5) und des Darstellens von Rückhalte-Flächen (15), die das Passieren der Auskragung (8) verhindern, wenn der Rückhaltering (11) in seiner ursprünglichen Gestalt vorliegt, ohne gedehnt zu sein.

12. Verfahren wie in Anspruch 11 beansprucht, **gekennzeichnet durch** Bereitstellen lateraler Halterung für den Ventilstempel (11) nur mittels der hervorstehenden Teile des Rückhalterings (11).

13. Verfahren wie in Anspruch 11 oder 12 beansprucht, **gekennzeichnet durch**
radiales Dehnen des Rückhalterings (11) mittels konischer Flächen (8a, 8b) der Auskragung (8), wenn der Ventilstempel (6) axial in Montier-Richtung gedrückt wird, und der Ventilstempel (6) entsprechend in Gegenrichtung gedrückt wird, wenn der Ventilstempel (6) demontiert wird.

## Revendications

1. Valve de mise à l'air libre (3) pour évacuer l'air d'un moule de vulcanisation (2) d'un pneu de véhicule,
dans lequel la valve de mise à l'air (3) comprend :
un corps de valve (4) comprenant une première extrémité (4a) configurée pour être orientée vers l'intérieur du moule (2) et une seconde extrémité (4b) configurée pour être orientée à l'opposé de l'intérieur du moule (2) ;
un canal d'aération (5) traversant longitudinalement le corps de valve (4) ;
une tige de valve mobile (6) disposée à l'intérieur du canal d'aération (5) et comprenant une première extrémité (6a) munie d'un élément de valve (7) pour ouvrir et fermer le canal d'aération (5), et une deuxième extrémité (6b) munie d'un collier (8) ;
un élément à ressort (9) pour presser la tige de soupape (6) dans la direction d'ouverture (B) vers une position d'ouverture dans laquelle le flux d'air (C) à travers le canal d'aération (5) est autorisé ; et
un élément de verrouillage situé à une deuxième extrémité (4b) du corps de valve (4) et configuré pour limiter le mouvement de la tige de valve (6) dans la direction d'ouverture (B) ;
**caractérisé en ce que**
l'élément de verrouillage est un anneau de retenue externe (11) ;
la deuxième partie d'extrémité (4b) du corps de valve (4) est pourvue d'une rainure de retenue (12) sur sa surface extérieure pour recevoir l'anneau de retenue (11) ;
le fond de la rainure de retenue (12) est pourvu d'au moins deux fentes (14) formant des ouvertures s'étendant jusqu'au canal d'aération (5) ; et
l'anneau de retenue (11) monté à l'intérieur de la rainure de retenue (12) est configuré pour faire partiellement saillie à l'intérieur du canal d'aération (5), moyennant quoi les parties saillantes de l'anneau de retenue (11) sont configurées pour former des surfaces de retenue (15) empêchant le collier (8) de les franchir.

2. Valve de mise à l'air libre selon la revendication 1, **caractérisé en ce que**
le corps de valve (4) comprend deux fentes (14) sur des côtés opposés du corps de valve (4).

3. Valve de mise à l'air libre selon la revendication 1, **caractérisé en ce que**
l'anneau de retenue (11) est un élément élastiquement déformable qui présente une forme de base et qui est extensible à de plus grandes dimensions.

4. Valve de mise à l'air libre selon l'une quelconque des revendications précédentes 1 à 3, **caractérisé en ce que**
le collier (8) est pourvu d'une première surface conique (8a) ; et
la première surface conique (8a) fait face à la deuxième extrémité (4b) du corps de valve (4) et est configurée pour provoquer l'expansion de l'anneau de retenue (11) lorsque la tige de vanne (6) est montée à l'intérieur du canal d'aération (5).

5. Valve de mise à l'air libre selon l'une quelconque des revendications précédentes 1 à 4, **caractérisée en ce que**
le collier (8) est pourvu d'une seconde surface conique (8b) ; et
la seconde surface conique (8b) fait face à la première extrémité (4a) du corps de valve (4) et est configurée pour provoquer l'expansion de la bague de retenue (11) lorsque la tige de valve (6) est retirée du canal de mise à l'air libre (5) en la poussant vers la première extrémité (4a) du corps de valve (4).

6. Valve de mise à l'air libre selon l'une quelconque des revendications précédentes 1 à 5, **caractérisée en ce que**
la deuxième partie d'extrémité (4b) du corps de valve (4) comprend des surfaces de support (16a) à l'intérieur du canal d'aération (5) et orientées vers la première extrémité (4a) du corps de valve (4) ; et
l'élément ressort (9) est appuyé contre les surfaces d'appui mentionnées (16a).

7. Valve de mise à l'air libre selon l'une quelconque des revendications précédentes 1 à 5, **caractérisé en ce que**
l'anneau de retenue (11) est configuré pour fournir un support axial à l'élément ressort (9).

8. Valve de mise à l'air libre selon l'une quelconque des revendications précédentes 1 à 7, **caractérisé en ce que**
l'anneau de retenue (11) est configuré pour fournir un support latéral à la tige de soupape (6).

9. Valve de mise à l'air libre selon l'une quelconque des revendications précédentes 1 à 8, **caractérisé en ce que**
la tige de soupape (6) et son collet (8) présentent une configuration solide.

10. Valve de mise à l'air libre selon l'une quelconque des revendications précédentes 1 à 9, **caractérisé en ce que**
l'anneau de retenue (11) comprend au moins deux pattes (Ila) faisant saillie radialement vers sa partie centrale.

11. Procédé de montage d'une tige de soupape (6) d'une valve de mise à l'air (3) comprenant un corps de valve (4) pourvu d'un canal d'aération longitudinal (5),
dans lequel ledit procédé comprend :
la poussée de la tige de valve (6) sous une force de montage externe longitudinalement dans la direction de montage à l'intérieur du canal d'aération (5) contre une force de ressort générée au moyen d'un élément de ressort (9) ; et
la fourniture d'un collier (8) sur la tige de valve (6) et l'empêchement de la tige de valve (6) de s'échapper du canal d'aération (5) au moyen d'un élément de verrouillage s'appuyant sur la collerette susmentionnée (8) lorsque la force de montage est supprimée et que la force du ressort tente de déplacer la tige de soupape (6) dans le sens inverse de la direction de montage ;
**caractérisé par**
l'utilisation d'un anneau de retenue externe (11) comme élément de verrouillage mentionné ;
le montage (M) de l'anneau de retenue mentionnée (11) dans une direction latérale sur une rainure de retenue (12) formée sur une surface extérieure du corps de valve (4) ;
la dilatation de l'anneau de retenue (11) radialement pendant l'assemblage et la reprise de sa forme initiale lorsqu'il est relâché dans la rainure de retenue (12) ; et
la saillie partielle de l'anneau de retenue (11) à certains endroits à l'intérieur du canal d'aération (5) et la formation de surfaces de retenue (15) qui empêchent le passage du collier (8) lorsque l'anneau de retenue (11) est dans sa forme d'origine sans avoir été dilaté.

12. Procédé tel que revendiqué dans la revendication 11, **caractérisé par** la fourniture d'un soutien latéral de la tige de soupape (6) uniquement au moyen des parties saillantes de l'anneau de retenue (11)

13. Procédé tel que revendiqué dans la revendication 11 ou 12, **caractérisé par**
l'élargissement radial de l'anneau de retenue (11) au moyen des surfaces coniques (8a, 8b) du collier (8) en poussant la tige de valve (6) axialement vers la direction de montage et en poussant de manière correspondante la tige de valve (6) dans une direction opposée lors du démontage de la tige de valve (6).
